# EUROPEAN PATENT APPLICATION

(11) **EP 3 789 101 A1**
(43) Date of publication of application: **10.03.2021**
(21) Application number: 19195979.0
(22) Date of filing: 06.09.2019
(51) Int. Cl.: B01D 53/04, B01D 53/26

(54) **AIR DRYING DEVICE AND SIEVE ELEMENT**

(71) Applicant: KNORR-BREMSE Systeme für Nutzfahrzeuge GmbH, 80809 München (DE)
(72) Inventor: Oláh, Tibor, 6000 Kecskemét (HU); Tóth, Zoltán László, 6100 Kiskunfélegyháza (HU)

(57) **Abstract**

A device for drying air of an air treatment system of a vehicle, comprising a housing, air drying means contained in the housing, an air inlet configured to receive air from the air treatment system and an air outlet for outputting air to the air treatment system, a connection means configured for mounting the device to the air treatment system, wherein the device is configured to be physically connected with a sieve element that can be arranged in a stream of air passing between the air treatment system and the device is described.

## Description

The invention relates to an air drying device for a compressed air treatment system of a vehicle, in particular a utility vehicle, with a housing and an air drying means contained in the housing.

Air drying devices such as air dryer cartridges are used as wearing parts within compressed air supply or compressed air treatment systems especially in the commercial vehicle sector. There they are used to clean the generated compressed air from oil and dirt particles and to dry the compressed air.

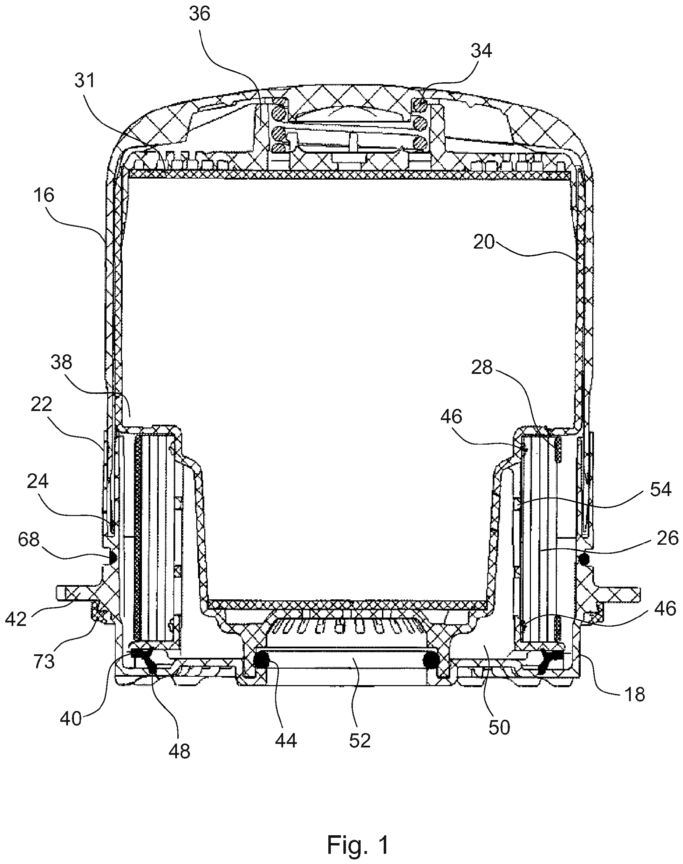

A conventional dryer cartridge 10 for a compressed air treatment system of a vehicle as shown Fig. 1 comprises a housing 16 and a base plate, which together in the assembled state of the air dryer cartridge define a volume of the air dryer cartridge. The cartridge comprises disposed within the volume as a part of an air drying means a desiccant 38 filled desiccant box 20 which is arranged in the housing 16.

The base plate comprises an air inlet 50 and an air outlet 52. An O-ring 44 and a sealing ring 40 seal between the base plate and the desiccant box 20. The sealing ring 40 can comprise a rubber lip seal, with a rubber lip 48 acting as a non-return valve. In alternative devices the sealing ring 40 may consist of another O-ring.

The sealing ring 40 is mechanically or chemically connected to the desiccant box 20, whereby the rubber lip 48 has a defined opening and closing characteristic. In particular, the rubber lip 48 opens when there is excess pressure in the air dryer cartridge 10 and thus acts as a safety valve. The desiccant box 20 is limited in its axial direction of extension by a first air filter 30. Optionally, a second air filter 31 or a fleece can be provided which retain the desiccant 38 inside the desiccant box 20. An optional compression spring 34 and a granulate cover 36 can also be provided in the upper area or lower area of the air dryer cartridge 10 to compress the desiccant 38 inside the desiccant box 20. The granulate cover 36 is particularly air-permeable.

A combination filter, for example in the form of a coalescing filter 26, extends in the axial direction around the lower half of the desiccant box 20 and is fixed in the radial direction by a sleeve 28 to a supporting structure of the desiccant box 20. The coalescing filter 26 divides the air dryer cartridge 10 into a pre-filter area and an after-filter area. The task of the coalescing filter 26 during a compressed air conveying phase is to hold oil and dirt particles as well as emulsion droplets on an inflow surface, to store liquid oil and to convert the finest oil droplets and aerosols into liquid oil by a coalescing effect and to separate them. The design of the outflow surface and the filter design results in a defined ratio of air outflow velocity and oil droplet size. This ratio guarantees that no oil droplets enter the desiccant box 20 via the after-filter area and thus shorten the service life of the air dryer cartridge 10 and downstream consumers.

Air guide elements 46 can be provided that project radially from the desiccant box 20 into the coalescing filter 26 and prevent the coalescing filter 26 from being bypassed by incoming air. The sealing during a compressed air conveying phase between the pre-filter area and the after-filter area is thus achieved by a special sealing geometry consisting of the air guide elements 46 in conjunction with the outer sleeve 28.

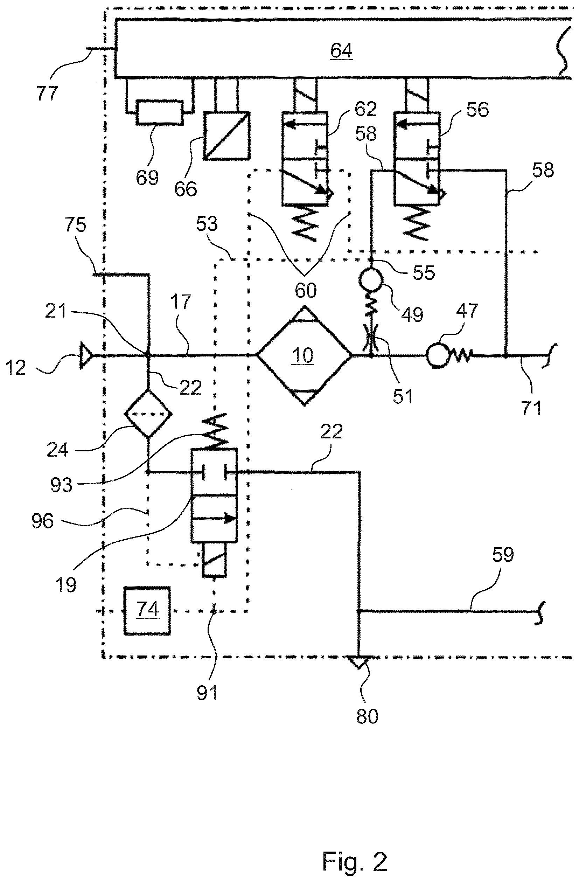

According to the example shown in Fig. 1 a projection 72 is disposed on the support member 18. The projection 72 is surrounded by a first seal 68 which seals between the support member 18 and the cartridge housing and a second seal 73 which seals between the support member 18 and a housing of an air treatment system 14 as shown in figure 2. This arrangement may, for example, be intended for mounting the air dryer cartridge 10 to the air treatment system 14 by means of a bayonet ring.

For spin-on designs, the air dryer cartridge 10 can comprise means for a thread connection with the air treatment system 14. For example, the projection 72 can be omitted and a thread symmetrically arranged with respect to the longitudinal axis of the air dryer cartridge 10 can be provided in the support member 18 which can be fitted to a corresponding thread of the air treatment system 14 to mount the air dryer cartridge 10 to the air treatment system 14.

Figure 2 shows a section of a schematic air treatment system 14 to which the air dryer cartridge 10 can be assembled. The air treatment system 14 has a compressed air inlet 12 to which a compressor can be connected. In addition, the air treatment system 14 includes an external filling connection 75 which can also be used to supply compressed air from an external compressed air source to the air treatment system 14, for example for service purposes in a workshop. Furthermore, a data bus connection 77 is provided via which the air treatment system 14 can communicate with other subsystems of the commercial vehicle, such as an engine control system. The air treatment system 14 comprises a compressed air delivery line 17, which connects the compressed air inlet 12 with the replaceable air dryer cartridge 10.

The air dryer cartridge 10 cleans the conveyed compressed air of oil and dirt particles and removes moisture from it. Air processed by the air dryer cartridge 10 is passed downstream of the air dryer cartridge 10 via a check valve 47. A multi-circuit protection valve connection 71 is indicated, whereby the multi-circuit protection valve not shown can be a component separate from the compressed air treatment system 10 or integrated into the compressed air treatment system 10. When the desiccant capacity of the air dryer cartridge 10 is exhausted, processed compressed air bypassing the check valve 47 can regenerate the air dryer cartridge 10 by reversing the flow direction via a regeneration line 58, another check valve 49 and a throttle 51. In the process, oil and dirt particles collected in the air dryer cartridge 10 as well as moisture stored in the desiccant are rinsed out of the air dryer cartridge 10. As shown in figure 2, the regeneration air continues to flow backwards through the compressed air delivery line 17 to a branching point 21 and from there via a vent line 22 to a vent 80. In the vent line 22 there is a drain valve 19, which can be designed as a 2/2-way valve, for example. Between the branch point 21 and the drain valve 19 there is a sieve element 24 which retains coarse dirt particles.

Usually, the sieve element 24 which can comprise an oil carbon sieve protects the drain valve 19 against cracked oils, which damage or block the drain valve 19, which can lead to permanent leakages and air loss of the whole air treatment system 10. These cracked oils occur mainly, if a bad compressor is used, which burns oil due to too high operating temperature.

The regeneration cycle can be controlled with a regeneration solenoid valve 56, which is arranged in the regeneration line 58 and can be designed as a 3/2-way valve, for example. A closing spring 93 of the drain valve 19 can be pre-tensioned via a control line 53, which branches off from the regeneration line 58 at a branch point 55, in order to adjust the pneumatic opening pressure of the drain valve 19, for example between an opening pressure of approx. 9.5 to 10 bar if the control line 53 is pressureless and an opening pressure of approx. 16 to 17 bar if the control line 53 is pressurized. The drain valve 19 can be pneumatically actuated via a further control line 60 in which a solenoid valve 62, designed as a 3/2-way valve for example, is arranged. In order to discharge the regeneration air via the vent 80, both the regeneration solenoid valve 56 and the solenoid valve 62 can be actuated simultaneously, so that the regeneration air reaches the vent 80 via the sieve element 24 and the drain valve 19 in order to exit the system there. The further control line 60 can have a further branch point 91, via which a further valve device 74 can be controlled, which in turn can put an unrepresented compressor, which provides the compressed air at the compressed air inlet 12, into an energy-saving operating state. In particular, the valve device 74 can enable particularly fast venting of the other control line 60 in order to change the operating state of the compressor more quickly. In such an energy-saving state, the drain valve 19 is simultaneously activated, so that a normally reduced compressed air flow rate of the compressor exits the system directly from the compressed air inlet via the sieve element 24 and the drain valve 19 via the vent 80. For example, a reduced compressed airflow rate may be approximately 20 percent of the normally conveyed compressed air volume.

As indicated in Figure 2, vent 80 can be connected to other components of the air treatment system 14, which are not shown, via an additional ventilation line 59. These components can also use vent 80 to expel compressed air from the system. Furthermore, the venting indicated on the regeneration solenoid valve 56 and the solenoid valve 62 can also be coupled with the vent 80, whereby the explicit representation of corresponding connecting lines has been omitted for a better overview. The air treatment system 14 comprises a control unit 64, which can control the regeneration solenoid valve 56 and the solenoid valve 62 and can be coupled to other subsystems of the commercial vehicle via the data bus connection 77. Also indicated are a heater 69 and a pressure sensor 66, which is controlled by the control unit 64 or via which the control unit 64 receives information on the pressure levels prevailing in the air treatment system 14. Heater 69 can be used in particular to prevent pressure lines from freezing. The pressure sensor 66 is only to be understood as an example for a whole number of pressure sensors which can measure the pressure in the air treatment system 14 at various points. In particular, 22 pressure sensors can be arranged upstream and downstream of the sieve element 24 in the vent line to determine a back pressure drop on the sieve element 24 when the drain valve 19 is open. In this way, a blockage of the sieve element 24 can be detected which would hinder the escape of the compressed air during a regeneration cycle, whereby this blockage can be a change criterion. The drain valve 19 also serves as a safety valve to prevent a dangerous increase in pressure in the air treatment system 14. A control line 95 is provided for this purpose, which opens the drain valve when an adjustable safety pressure is exceeded.

According to the state of the art, it is known to use an oil carbon sieve as sieve element 24, which is intended as a separate piece and installed in the air treatment system 14. An example of an oil carbon sieve is described in European patent application EP 2505444 A2. However, as a shortcoming the air dryer cartridge 10 and the sieve element 24 have to be mounted to the air treatment system 14 and be replaced as separate pieces, which is cumbersome. Furthermore, it was an experience that the sieve moves away from its mounting position during operation of the vehicle in which the air treatment system 14 is mounted, for example, because of vibrations caused by the movement of the vehicle. Furthermore, from the view of the assembler the sieve element 24 can be located in the air treatment system 14 behind the air dryer cartridge 10 so that it is not visible during the assembling of the air dryer cartridge 10.

Also the dismounting of a conventional sieve element 24 can be cumbersome, since it is usually oil-contaminated after use and furthermore can be relatively small so that it is difficult to grab.

It is an object of the present invention to provide an improved device for drying air of an air treatment system which overcomes the disadvantages of prior art, in particular, avoids a cumbersome and faulty mounting or dismounting procedure of the sieve element.

According to the present invention the problem is solved by an air dryer cartridge having the features of claim 1.

According to the invention the problem is solved by a device for drying air of an air treatment system of a vehicle also denoted as an air dryer cartridge, comprising a housing, an air drying means contained in the housing, an air inlet configured to receive air from the air treatment system and an air outlet for outputting air to the air treatment system, a connection means configured for mounting the device to the air treatment system, wherein the device is configured to be connected to a sieve element that can be arranged in an stream of air between the air treatment system and the device.

The air dryer cartridge of the present invention has the advantage that it can be mounted together with the sieve element as one part to the air treatment system, so that the risk that the sieve displaces from its intended position in the air treatment system during or after the mounting of the device can be avoided even if the sieve element is hidden behind the device and not visible by an assembler during the mounting. In addition, mounting time of the air dryer cartridge device and the sieve element can be reduced since both parts are combined into one part and are mounted simultaneously as one piece.

Providing the sieve element connected to the cartridge as one piece also has the advantage that both parts can be replaced together without the need to touch or grab the sieve element which is frequently contaminated with oil after its use.

According to an embodiment the connection means is at least a part of one of a bayonet connector, a thread connection, a plug connection. These connection means can be used for air dryer cartridge devices being designed for different types of mounting mechanisms including spin-on designs and thread less mounting designs.

According to another embodiment the device comprises at least one of a magnet, a thread, a part of a clip mechanism configured for connecting a sieve element to it. These connection means provide for a reliable but detachable connection between the device and the sieve element.

According to a further embodiment the device is configured or comprises a connection part for connecting the sieve element to the device so that the sieve element can be mounted to the device with the sieve element being rotatable about an axis of the device. This configuration permits to design the device with a spin-on connection means such as a thread for assembly to the air treatment system, wherein the sieve element can be introduced into a recess or seat connected to a vent line of the air treatment system, and remains circumferentially in rest, while the device is getting connected to the air treatment system by screwing it into a corresponding thread seat of the air treatment system. During this connection process the sieve element, which remains circumferentially in rest, together with the device being screwed into the thread seat of the air treatment system, is advanced into the recess or seat connected to the vent line of the air treatment system.

According to another embodiment the device is configured or comprises a connection part to connect a sieve element to the device so that the sieve element is mounted to the device in such a manner that the sieve element is movable along an axis, in particular, the longitudinal axis of the device about a predetermined distance. This configuration permits the sieve element to correctly adjust its position in the air treatment system and, in particular, permits to adjust its longitudinal position and extension, which ensures a tight seat in a recess in the air treatment system. Thus air can be prevented from bypassing the sieve element.

According to yet another embodiment the sieve element comprises one or more expandable lateral walls supporting a top wall of the sieve element which can be displaced with respect to a top side of the device so that the volume covered by the sieve element can be varied. One or more sieves can be provided in one or more of the top wall and the one or more expandable lateral walls of the sieve element. This embodiment has the advantage that the adjustment of the size of the sieve element and position of the sieve can be automatically performed and bypassing of air can be prevented even under adverse or harsh operation conditions.

According to still another embodiment the device comprises a sealing means configured to seal the device against the air treatment system when the device is mounted to the air treatment system. The sealing means can be an O-ring or a lip provided in or connected to a base plate of the device. According to another embodiment the sieve element connected to the device is positioned within a sealed volume between the air treatment system and the device sealed by the sealing means. Also sealed by the sealing means, the base plate of the device may comprise at least one of an air inlet and an air outlet connected to respective lines such as a vent line and/or an air delivery line of the air treatment system for exchange of an airstream between the device and the air treatment system through the sieve element.

According to a further embodiment the device further comprises the sieve element integrally connected to the device. The sieve element may comprise one or more sieves.

According to a still another embodiment the device comprises the sieve element, wherein the sieve element comprises at least one of a magnet, a thread, a part of a clip mechanism configured for connecting the sieve element to a respective complementary part of the device.

According to a further embodiment the sieve element or a part thereof comprises a symmetric, in particular rotation symmetric design, the shape of a circular arc or a ring shape, the sieve element or the part thereof being symmetric with respect to a longitudinal axis of the device. This configuration is suitable for a device having a spin on design, wherein the sieve element or a part thereof is configured so that it is movable with respect to the device when it is connected to it so that the sieve element remains in a circumferentially fixed position with respect to the air treatment system, when the device is screwed into a thread or seat of the air treatment system.

According to a further embodiment the sieve element comprises a shape of a box comprising at least two sieves arranged in two adjacent or opposite sides of the box, the box being configured so that the stream of air passing between the air treatment system and the device passes through at least one of the sieves of the sieve element. This design has the advantage that it provides a high filtering efficiency due to a use of more than one sieve and prevents a bypassing of particles from either side of the sieve element. According to an embodiment at least one of the sides of the box -shaped sieve element can be open or have an opening.

According to an embodiment the sieve element comprises one or more expandable lateral walls supporting or connected to a top wall of the sieve element which can be displaced with respect to the bottom wall of the sieve element so that the volume of the box shaped sieve element can be varied.

According to a further embodiment the sieve element comprises a sieve comprising a carbon comprising substance. Alternatively, the sieve may comprise other components or substances having a good filtering efficiency. The sieve can also have a structure including multiple openings or a mesh or grating structure.

According to yet another embodiment the device comprises a first sieve integrated in a top section thereof and a second sieve integrated in the sieve element connected to the device above the top section, the sieve element being configured so that the stream of air passing between the air treatment system and the device passes through at least one of the first and second sieves. According to this embodiment at least one of the sieves can be removable or replaceable, while at least one other sieve forms an integral part of the device.

According to a further embodiment the device is configured so that during mounting of the device to the air treatment system or in its mounted state the sieve element is correctly positioned in a recess or seat of the air treatment system so that the stream of air passing between the air treatment system and the device passes through the sieve element. This can be achieved by using a geometry or shape for the sieve element and the recess or seat of the air treatment system having shape conformity. Accordingly, undesirable bypassing of the sieve element by air can be prevented even when the device is used under harsh or adverse operation conditions.

According to still another embodiment the device is configured so that the sieve element is connected appropriately to a vent line of the air treatment system when the device is mounted to the air treatment system so that the stream of air passing between the air treatment system and the device passes through the sieve element.

According to still another embodiment the device is configured to pull out the sieve element from the air treatment system during dismounting of the device from the air treatment system. This permits an easy replacement of the sieve element together with the device, while any contamination with oil of persons handling the device can be prevented.

The invention also refers to a sieve element for a device for drying air of an air treatment system of a vehicle, the sieve element configured to be physically connected with a device for drying air according to one or more of the device and embodiments previously described.

The sieve element can be configured like and have the characteristic of the sieve element described above.

According to an embodiment the sieve element comprises at least one of a magnet, a thread, at least a part of a clip mechanism configured for connecting the sieve element to a respective complementary part of the device.

According to another embodiment the sieve element or a part thereof comprises a symmetric, in particular rotation symmetric design, the shape of a circular arc or a ring shape, the sieve element or the part thereof being symmetric with respect to a longitudinal axis of the device.

According to another embodiment the sieve element comprises a shape of a box comprising at least two sieves arranged in two adjacent or opposite sides of the sieve element, the sieve element being configured so that the stream of air passing between the air treatment system and the device passes through at least one of the sieves.

According to yet another embodiment the sieve element comprises one or more expandable lateral walls supporting a top wall of the sieve element which can be displaced with respect to a bottom wall of the sieve element so that the volume of the box shaped sieve element can be varied.

According to another embodiment the sieve element comprises a sieve comprising a carbon comprising substance.

Further details, advantages and aspects of the invention will result from the description of exemplifying embodiments of the invention with reference to the drawing in which
- Fig. 1: shows an example of an air dryer cartridge device;
- Fig. 2: shows a schematic example of a section of an air treatment system;
- Fig. 3: shows a detail of an air dryer cartridge device according to an embodiment;
- Fig. 4: shows a detail of an air dryer cartridge device according to another embodiment;
- Fig. 5: shows a detail of an air dryer cartridge device according to a further embodiment;
- Fig. 6: shows a detail of an air dryer cartridge device according to still another embodiment; and
- Fig. 7: shows a detail of an air dryer cartridge device according to yet another embodiment.

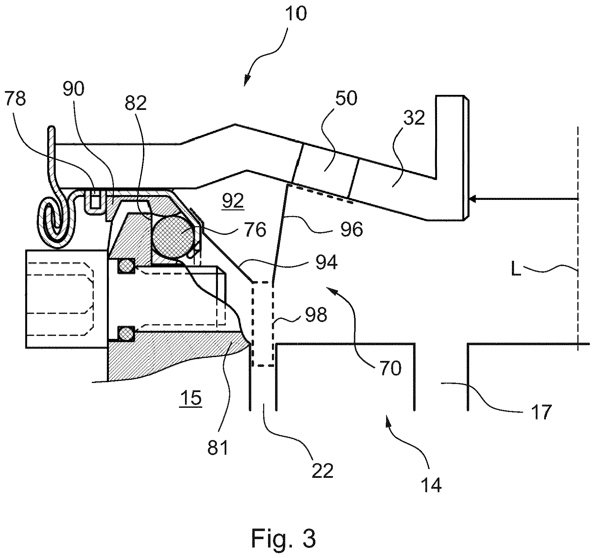

Embodiments of the invention will be described in the following with reference to the drawings. In Fig. 3 a baseplate 32 of an air dryer cartridge device 10 (as shown in Fig. 1) having a sieve element 24 connected to it is shown in cross-section. The air dryer cartridge 10 is tightly connected to a base part 15 of the air treatment system 14 by means of a sealing interface 70.

The sealing interface 70 comprises at least one sealing means 76, has at least one sheet metal element 78 on the air drying cartridge side and at least one projection 80 on the base part 15, the projection 81 on the base part 15 having a bearing surface 82 for the sealing means 76, which bearing surface is directed radially inwards relative to the longitudinal axis L of the base part 15 and the air drying cartridge 10, the sheet metal element 78 being fastened on the air-drying cartridge side, and the sealing means 76 pressing against the bearing surface 82 in the assembled state, a holding element 90 further being provided which, in the assembled state, is arranged in such a way that the sealing means 76 is held between the sheet metal element 78 and the bearing surface 82 at least partially in the axial and radial direction relative to the longitudinal axis L by means of the sheet metal element 78 and the holding element 90. As a sealing means 76 between the air dryer cartridge 10 and the air treatment system 14 an O-ring can be used.

The sieve element 24 which is connected to the baseplate 32 of an air dryer cartridge device 10 comprises a ring shaped part 92 such as a support part extending symmetrically about a longitudinal axis L of the air dryer cartridge 10. The ring shaped part 92 may extend over any angle between 10° and 360°, including 25°, 45°, 60°, 90°, 120° and multiples thereof about the longitudinal axis of the air dryer cartridge 10. The ring shaped part 92 of the sieve element 24 comprises two lateral walls 94, 96 comprising in a cross-section an angle of about 30° t0 45° with respect to each other. The ring shaped part 92 shown represents just one example and any suitable shape of the lateral walls can be used including a straight, rounded or other shape.

The sheet metal element 78 connected to the baseplate 32 of the air dryer cartridge 10 comprises a circular main section and a lateral section having a shape of a ring. The lateral section which represents a contact surface for the sealing means 76 is arranged symmetrically with respect to the longitudinal axis of the air dryer cartridge 10 and extends from the baseplate 32 downwards in direction of the air treatment system 14. An end segment of one of the walls 94 of the ring shaped part 92 of the sieve element 24 rests on the lateral section of the sheet metal element 78, while the other lateral wall 96 of the ring shaped part 92 of the sieve element 24 comprises an end segment or flap that is connected to the baseplate 32 of the air dryer cartridge 10. Both lateral ring-shaped walls of the ring shaped part 92 of the sieve element 24 are movably connected with the sheet metal element 78 and the baseplate 32, respectively, so that the sieve element 24 can be rotated with respect to the air dryer cartridge 10. The connection between the lateral walls of the ring shaped part 92 of the sieve element 24 and the air dryer cartridge device 10 can be provided, for example, by clip connections between the lateral walls of the ring shaped part 92 and the sheet metal element 78 and the baseplate 32, respectively. However, other connections can be used as well such as a rotatable support connected to a rotatable axle or hinge of the air dryer cartridge device 10 or the baseplate 32.

A box shaped part 98 of the sieve element 24 extends from the ring shaped part 92 of the sieve element 24 into a vent line 22 or respective seat of the air treatment system 14. The box shaped part 98 of the sieve element 24 is connected at one of its sides to the lateral walls 94, 96 of the ring shaped part 98 of the sieve element 24. The lateral walls 94, 96 of the ring shaped part 92 of the sieve element 24 are connected at their ends to opposite sides of the box shaped part 98 of the sieve element 24. Generally, the box shaped part 98 of the sieve element 24 comprises at least one sieve in one of its walls, but may also comprise two or more sieves that are provided on opposing sides or adjacent sides of the box shaped part 98 of the sieve element 24 as appropriate. The sides or walls of the box shaped part 98 of the sieve element 24 together form a cage which air passing from the air dryer cartridge 10 to the air treatment system 14 including air coming from the compressor through the compressed air delivery line 17 or passing through an opening such as an inlet 50 in the air dryer cartridge 10 must traverse. Particles and oil contained in the air that traverses the at least one sieve of the box shaped part 98 are held back by the sieve. The box shaped part 98 may comprise one or more plane walls or rounded walls and may also comprise a cylindrical wall.

Due to its movable, in particular rotatable connection to the baseplate 32 of the air dryer cartridge 10, the sieve element 24 rotates with respect to the air dryer cartridge 10 while the air dryer cartridge 10 is getting connected to the air treatment system 10 by means of a thread formed in or on the baseplate 32 of the air dryer cartridge 10. Simultaneously, the box shaped part 98 of the sieve element 24 remains at a fixed position and inserted into the vent line 22 or a corresponding seat thereof without rotating with respect to the air treatment system 14. Hence, the movable connection of the sieve element 24 and the air dryer cartridge device 10 according to this embodiment is particularly suitable for air dryer cartridge devices having a spin-on connection design without any limitation to it.

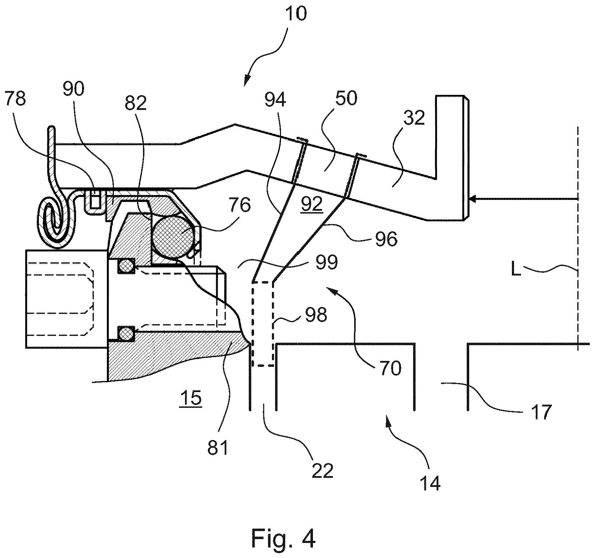

Another embodiment of the invention is described in the following with reference to Fig. 4. The same reference numerals are used in Figs. 3 and 4 for the same or corresponding parts. Only divergent features with respect to the embodiment shown in Fig. 3 will be described in the following.

In Fig. 4 both lateral ring-shaped walls 94, 96 of the ring shaped part 98 of the sieve element 24 are fixedly connected with the baseplate 32 so that the sieve element 24 is stably mounted to the air dryer cartridge 10. For example, the lateral ring-shaped walls 94, 96 of the ring shaped part 98 of the sieve element 24 can be configured for clipping into one or more openings such as inlets 50 in the baseplate 32. However, other connections can be provided as well including a screw connection, bolted connection, rivet connection, solder connection, welding connection, adhesive connection etc.

A box shaped part 98 of the sieve element 24 which can correspond to the box shaped part 98 described with regard to the embodiment shown in Fig. 3 extends from the ring shaped part 92 of the sieve element 24 into a ring shaped groove connected and partly correspond to a vent line 22 of the air treatment system 14.

Due to its fixed connection to the baseplate 32 of the air dryer cartridge 10, both the air dryer cartridge 10 and the sieve element 24 are rotated when the air dryer cartridge 10 gets connected to the air treatment system 10 by means of a thread formed in or on the baseplate 32 of the air dryer cartridge 10. During the mounting process the box shaped part 98 of the sieve element 24 moves along a circular groove formed in the air treatment system 14 which in Fig. 4 overlaps and corresponds to the upper section of the vent line 22. When the air dryer cartridge 10 reaches its final position in the air treatment system 14, the box shaped part 98 of the sieve element 24 must be positioned circumferentially in the groove at the vent line 22 of the air treatment system 14 so that air entering or exhausted by the vent line 22 has to transverse at least one of the sieves of the sieve element 24. However, other designs of the air treatment system 14 without providing groove for the box shaped part 98 of the sieve element 24 can be conceived as well.

Also other assemblies than spin-on connections for connecting the air dryer cartridge device 10 including the sieve element 24 to the air treatment system 14 can be provided as alternatives or in combination with the spin-on connection described with respect to the embodiments shown in Figs. 3 and 4 such as a bayonet connection or plug connection etc.

In both embodiments shown in Figs. 3 and 4, respectively, the box shaped part 98 of the sieve element 24 could be replaced by or combined with a different sieve element 24 such as for example a planar sieve element comprising or consisting of a single sieve only or a box-shaped, for example cylindrical sieve element comprising one or more, in particular, cylindrical sieves.

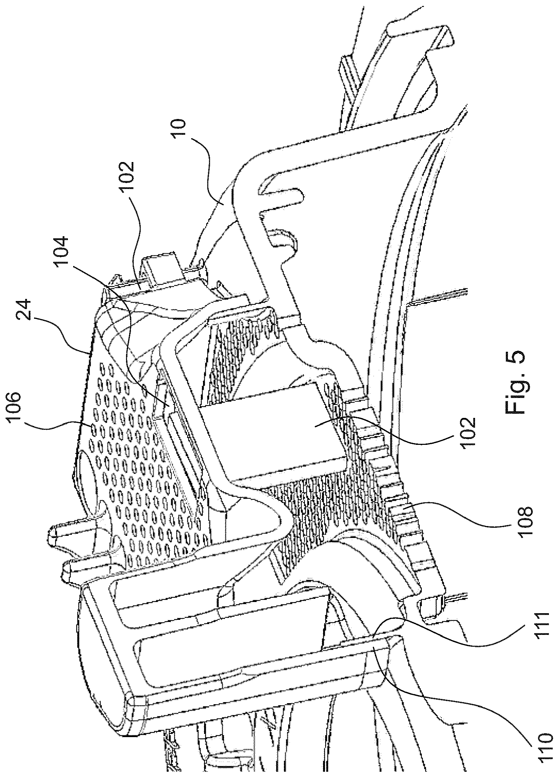

Figure 5 describes another embodiment of the invention. In Fig. 5 a top part of the air dryer cartridge 10 is shown which is designed for a connection with an air treatment system 14. Connected to the top part of the air dryer cartridge 10 is a sieve element 24 using a clipping connection comprising one part formed by a number of lugs or bars 102 provided on the air dryer cartridge 10 and another part formed by a corresponding number of openings 104 for receiving the lugs 102 provided on the sieve element 24. For example, four pairs of lugs 102 and openings 104 can be provided on opposing sides of the sieve element 24. Due to the lugs 102 being provided in the openings 104 and hooks provided at the end of the lugs 102 the sieve element 24 is movable along an axis of the air dryer cartridge device 10 about a predetermined distance. This configuration permits the sieve element 24 to correctly adjust in its position in a seat provided in the air treatment system 14, in particular, to adjust its longitudinal position and extension, and ensures a tight seat in a recess in the air treatment system. Thus air can be prevented from bypassing the sieve element.

The sieve element 24 comprises at least one sieve 106 provided in a top surface thereof. Next to the sieve 106 the sieve element 24 comprises a steeple-like structure which is configured to fit into a corresponding recess provided in the air treatment system 14. Furthermore, at least one sieve 108 is provided in the top part of the air dryer cartridge device 10 below the at least one sieve of the sieve element 24.

In addition, the sieve element 24 comprises an expandable lateral wall 110 supporting a top wall of the sieve element 24 which comprises the sieve 106. The expandable lateral wall 110 which overlaps with a corresponding lateral wall 111 extending from the top part of the air dryer cartridge 10. Due to the expandable lateral wall 110 overlapping the wall 111 of the air dryer cartridge 10 the sieve element 24 can be displaced with respect to top part of the air dryer cartridge 10. Hence, the position and volume of the sieve element 24 can be varied without air bypassing the sieve element 24.

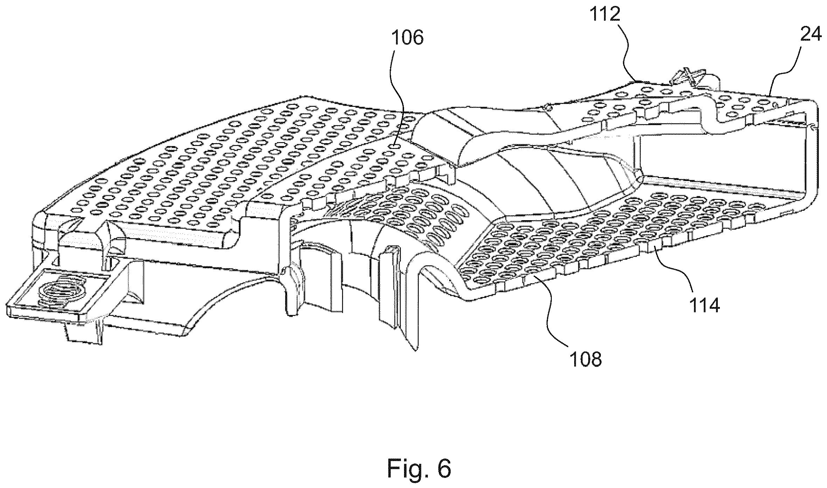

Figure 6 shows a further embodiment of an air dryer cartridge device 10 comprising a sieve element 24. In contrast to the sieve element 24 shown in Fig. 5 the sieve element 24 of the embodiment shown in Fig. 6 is fixedly connected to a top part of the air dryer cartridge 10. For example, the sieve element of this embodiment may be integrated into the air dryer cartridge device 10. Alternatively, the sieve element 24 may be connected to the air dryer cartridge device 10 by a clip connection, screws, etc. The sieve element 24 comprises a section comprising a top part 112 and bottom part 114 which are connected to each other and form a closed volume, box or cage. In this section a first sieve 106 of the top part 112 and a second sieve 108 of the bottom part 114 are arranged on top of each other. The upper surface of the sieve element 24 is configured to match a corresponding recess in the air treatment system 14, when the air dryer cartridge device 10 comprising the sieve element 24 is assembled to it. In another adjacent section, the sieve element 24 comprises a single sieve only.

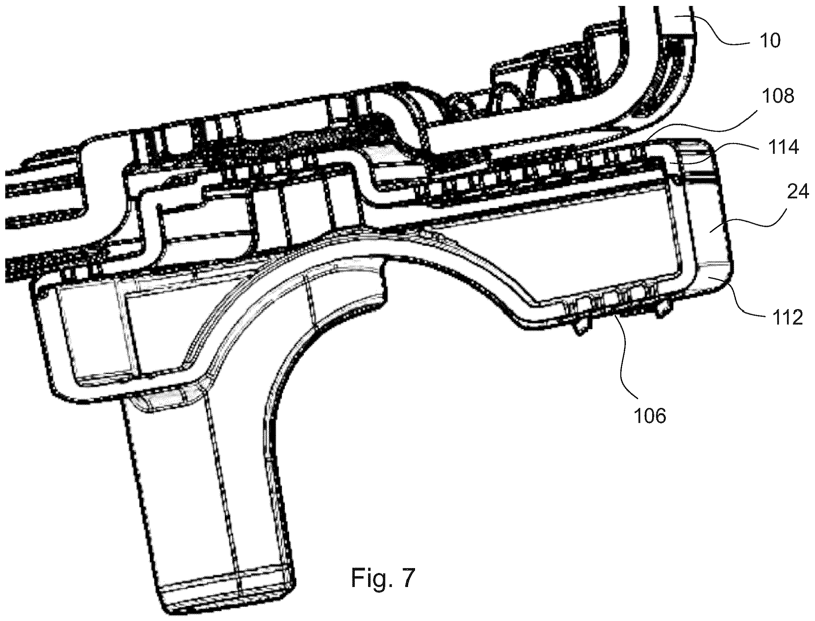

In Fig. 7 another embodiment of an air dryer cartridge device 10 comprising a connected sieve element 24 is illustrated. The sieve element 24 can be connected to the air dryer cartridge device 10 in a manner which permits a rotation of the sieve element 24 with respect to the air dryer cartridge device 10 so that the air dryer cartridge device 10 can be configured with a spin-on configuration for an assembly with the air treatment system 14. However, an immovable connection between the air dryer cartridge device and the sieve element 24 such as a clip connection or screws can be provided alternatively. The sieve element 24 comprises a top part 112 and bottom part 114 which are connected to each other forming a closed volume there between. The top part 112 as well as the bottom part 114 each comprises a sieve 106, 108 in parallel surfaces thereof. The sieve element 24 is configured to be connected to or integrated in the top part of an air dryer cartridge 10.

Various changes can be provided to the different embodiments described without departing from the scope of the invention as defined in the claims.

### Reference Numerals:

- 10: air dryer cartridge
- 16: housing
- 38: desiccant
- 20: desiccant box
- 50: air inlet
- 52: air outlet
- 44: O-ring
- 40: sealing ring
- 48: rubber lip
- 30: filter
- 34: compression spring
- 36: granulate cover
- 26: coalescing filter
- 46: air guide elements
- 28: outer sleeve
- 18: support member
- 72: projection
- 68: first seal
- 73: second seal
- 12: compressed air inlet
- 75: external filling connection
- 77: data bus connection
- 17: compressed air delivery line
- 47: check valve
- 71: multi-circuit protection valve connection
- 49: check valve
- 51: throttle
- 22: vent line
- 80: vent
- 19: drain valve
- 21: branch point
- 56: regeneration solenoid valve
- 58: regeneration line
- 53: control line
- 55: branch point
- 62: solenoid valve
- 60: control line
- 93: closing spring
- 91: branch point
- 74: valve device
- 59: ventilation line
- 69: heater
- 66: pressure sensor
- 95: control line
- 24: sieve element
- 32: base plate
- 70: sealing interface
- 76: sealing means
- 15: base part
- 82: bearing surface
- 81: projection
- 78: sheet metal element
- 90: holding element
- 92: ring shaped part
- 94: lateral wall
- 96: lateral wall
- 98: box shaped part
- 102: lugs
- 104: openings
- 106: sieve
- 108: sieve
- 110: expandable lateral wall
- 111: lateral wall
- 112: top part
- 114: bottom part

## Claims

1. A device (10) for drying air of an air treatment system (14) of a vehicle, comprising:
a housing (16);
air drying means (38) contained in the housing (16);
an air inlet (50) configured to receive air from the air treatment system (14) and an air outlet (52) for outputting air to the air treatment system (14);
a connection means configured for mounting the device (10) to the air treatment system (14), **characterized in that**
the device (10) is configured to be physically connected with a sieve element (24) that can be arranged in a stream of air passing between the air treatment system (14) and the device (10).

2. The device (10) of claim 1, wherein the device (10) comprises at least one of a magnet, a thread, a part of a clip mechanism configured for connecting the sieve element (24).

3. The device (10) of claim 1 or 2, wherein the device (10) is configured or comprises a connection part for connecting the sieve element (24) to the device (10) so that the sieve element (24) can be mounted to the device (10) with the sieve element (24) being rotatable about an axis of the device (10).

4. The device (10) of one of claims 1 to 3, wherein the device (10) is configured or comprises a connection part for connecting the sieve element (24) to the device (10) so that the sieve element (24) can be mounted to the device (10) with the sieve element (24) or a part thereof being movable along an axis of the device (10) about a predetermined distance.

5. The device (10) of one of claims 1 to 4, further comprising the sieve element (24) integrally connected to the device (10).

6. The device (10) of one of claims 1 to 4, further comprising the sieve element (24), wherein the sieve element (24) comprises at least one of a magnet, a thread, at least a part of a clip mechanism configured for connecting the sieve element (24) to a respective complementary part of the device (10).

7. The device (10) of one of claims 5 or 6, wherein the sieve element (24) or a part thereof comprises a symmetric, in particular rotation symmetric design, the shape of a circular arc or a ring shape, the sieve element (24) or the part thereof being symmetric with respect to a longitudinal axis of the device (10).

8. The device (10) of one of claims 5 to 7, wherein the sieve element (24) comprises a shape of a box comprising at least two sieves arranged in two adjacent or opposite sides of the sieve element (24), the sieve element (24) being configured so that the stream of air passing between the air treatment system (14) and the device (10) passes through at least one of the sieves.

9. The device (10) of claim 8, wherein the sieve element (24) comprises one or more expandable lateral walls (112) supporting a top wall of the sieve element (24) which can be displaced with respect to a bottom wall of the sieve element (24) so that the volume of the box shaped sieve element (24) can be varied.

10. The device (10) of one of claims 5 to 9, wherein the device (10) comprises a first sieve integrated in a top section thereof and a second sieve integrated in the sieve element (24) connected to the device (10) above the top section, the sieve element (24) configured so that the stream of air passing between the air treatment system (14) and the device (10) passes through at least one of the first and second sieve.

11. The device (10) of one of claims 5 to 10, the device (10) being configured so that during mounting of the device (10) to the air treatment system (14) or in its mounted state the sieve element (24) is correctly positioned in a recess or seat of the air treatment system (14) so that the stream of air passing between the air treatment system (14) and the device (10) passes through the sieve element (24).

12. The device (10) of one of claims 5 to 11, the device (10) being configured so that the sieve element (24) is connected to a vent line (22) of the air treatment system (14) when the device (10) is mounted to the air treatment system (14) so that the stream of air passing between the air treatment system (14) and the device (10) passes through the sieve element (24).

13. The device (10) of one of claims 5 to 12, the device (10) being configured to pull out the sieve element (24) from the air treatment system (14) during dismounting of the device (10) from the air treatment system (14).

14. A sieve element (24) for a device for drying air of an air treatment system (14) of a vehicle, the sieve element (24) configured to be physically connected with a device according to one of the preceding claims.

15. The sieve element (24) of claim 14, comprising at least one of a magnet, a thread, at least a part of a clip mechanism configured for connecting the sieve element (24) to a respective complementary part of the device (10).
